# EUROPÄISCHE PATENTSCHRIFT

(11) **EP 0 945 051 B1**
(45) Veröffentlichungstag und Bekanntmachung des Hinweises auf die Patenterteilung: **23.07.2003**
(21) Anmeldenummer: 99105539.3
(22) Anmeldetag: 18.03.1999
(51) Int. Cl.: A01D 34/66

(54) **Mähmaschine**
Mowing machine
Faucheuse

(30) Priorität: 26.03.1998 DE 19813233
(43) Veröffentlichungstag der Anmeldung: 29.09.1999
(73) Patentinhaber: Maschinenfabrik Bernard Krone GmbH, 48480 Spelle (DE)
(72) Erfinder: Krone, Bernard Dr.-Ing. E.h., 48480 Spelle (DE); Horstmann, Josef Dr.-Ing., 49479 Ibbenbüren (DE)

(56) Entgegenhaltungen:
- EP-A- 0 211 785
- EP-A- 0 514 314
- EP-A- 0 709 018
- NL-A- 8 006 522

## Beschreibung

Die vorliegende Erfindung bezieht sich auf eine Mähmaschine gemäß dem Oberbegriff des Anspruchs 1. Derartige Mähmaschinen sind für sich bekannt und werden hauptsächlich zum Ernten von Gras oder dgl. landwirtschaftlichen Halmgütern eingesetzt. Im Betrieb können sie beidseitig von einem landwirtschaftlichen Trägerfahrzeug angeordnet sein oder an eine heckseitige Dreipunkthubeinrichtung des landwirtschaftlichen Trägerfahrzeuges, wie beispielsweise eines landwirtschaftlichen Ackerschleppers angekoppelt werden, wobei ihre rotierenden Schneidorgane von dem landwirtschaftlichen Trägerfahrzeug aus antreibbar sind.

Eine Mähmaschine mit den vorstehend aufgeführten Merkmalen ist in der DE 296 14 199 U1 offenbart und umfaßt einen mittels einer Verbindungseinrichtung an einer Dreipunkthubeinrichtung ankoppelbaren Tragrahmen mit einem Tragarm, an dem schwenkbar um eine in Fahrt- und Arbeitsrichtung gerichtete Achse ein Mähaggregat angelenkt ist. Um eine nahezu gleichmäßige Auflagekraft des Mähaggregates auf dem Erdboden zu erreichen, ist die Schwenkverbindung zwischen dem Tragarm und dem Mähaggregat bezüglich der Arbeitsbreite etwa mittig am Mähaggregat (Anlenkung im Schwerpunkt) vorgesehen. Bei einer vorstehend beschriebenen Mähmaschine erweist es sich als nachteilig, daß die Mäheinrichtung in der Arbeitsund Betriebsstellung beim Passieren von Bodenunebenheiten, insbesondere an den in Bezug zur Arbeitsbreite äusseren Abschnitten zunächst zurückgehalten wird und dann nach dem Überqueren der Bodenunebenheit plötzlich hervorschnellt. Das bedeutet, daß beim Einsatz der Mähmaschine ständig Drehschwingungen der Mäheinrichtung um eine durch die Schwenkverbindung zwischen dem Tragarm und der Mäheinrichtung führende vertikale Achse auftreten. Diese Drehschwingungen erzeugen an der Schwenkverbindung zwischen dem Tragarm und der Mäheinrichtung Belastungsspitzen, die insbesondere bei Mähmaschinen mit großer Arbeitsbreite zu Beschädigungen oder Brüchen an der Schwenkverbindung führen können.

Aufgabe der Erfindung ist es daher, eine Mähmaschine zum Ernten von Gras oder dgl. landwirtschaftlichen Halmgütern der vorstehend genannten Art mit einer Verbindung zwischen dem Tragarm und der Mäheinrichtung zu schaffen, durch die unter Beibehaltung einer optimalen Führung der Schneidorgane bei Bodenunebenheiten und einer über die Arbeitsbreite gleichbleibenden Auflagekraft der Schneidorgane auf dem Erdboden eine zuverlässige Aufnahme aller beim Mäheinsatz auftretenden Beanspruchungen ermöglicht wird.

Zur Lösung der gestellten Aufgabe zeichnet sich die Mähmaschine der vorstehend genannten Art durch die im kennzeichnenden Teil des Anspruches 1 angegebenen Merkmale aus. Hinsichtlich der weiteren Ausgestaltung der Erfindung wird auf die Ansprüche 2 bis 15 verwiesen.

Durch die Erfindung wird eine Lösung offenbart, wie in einer konstruktiv einfachen Weise eine Verbindung zwischen einem Tragarm einer Trageinrichtung und einer Mäheinrichtung geschaffen werden kann, durch die neben einer optimalen Führung der Mäheinrichtung bei Bodenunebenheiten und einer gleichbleibenden Auflagekraft auf dem Erdboden auch eine Einleitung bzw. Aufnahme aller beim Mäheinsatz auftretenden Beanspruchungen so erfolgen kann, daß Beschädigungen oder gar Brüche sicher vermieden werden. Dazu ist es vorgesehen, eine Gelenkverbindung zwischen dem Tragarm und der Mäheinrichtung, welche bezüglich der Arbeitsbreite in etwa mittig (Schwerpunktaufhängung der Mäheinrichtung) an der Mäheinrichtung angebracht ist, um zumindest zwei Schwenkachsen schwenkbar auszubilden und der Gelenkverbindung zur Führung der Mäheinrichtung Lenker zuzuordnen, welche sich zwischen dem Tragarm und einem der Fahrspur des landwirtschaftlichen Trägerfahrzeuges zugewandten, seitlichen Abschnitt der Mäheinrichtung erstrecken. Die Lenker können mit jeweiligen Aufnahmestücken die Form eines viergliedrigen Kurbelgetriebes bilden. Eine Schwenkachse der Gelenkverbindung ist dabei in Fahrtund Arbeitsrichtung ausgerichtet, während die zweite Schwenkachse zumindest etwa quer zur Fahrt- und Arbeitsrichtung gerichtet sein kann. Vorzugsweise ist es vorgesehen, die Gelenkverbindung zwischen dem Tragarm und der Mäheinrichtung als ein Kugelgelenk auszuführen.

Wie bereits vorstehend erwähnt, sind zur Führung der Mäheinrichtung der Mähmaschine Lenker vorgesehen. Eine vorteilhafte Ausführungsform der Erfindung geht davon aus, daß die Lenker in einer etwa in Fahrt- und Arbeitsrichtung gerichteten, vertikalen Ebene übereinander angeordnet sind. Das bedeutet, daß sich beide Lenker ausgehend von einer Aufnahmelasche des Tragarmes in einer vertikalen Ebene entlang einer Gehäusewand eines der Fahrspur des landwirtschaftlichen Trägerfahrzeuges zugewandten Abschnittes der Mäheinrichtung zu einer Aufnahmetasche der Mäheinrichtung erstrecken. Dabei können in Ausbildung der Erfindung die Lenker ausgehend vom Tragarm entweder in einer der Fahrt- und Arbeitsrichtung entgegengesetzt gerichteten oder einer der Fahrt- und Arbeitsrichtung entsprechenden Richtung zur Mäheinrichtung verlaufen. Vorzugsweise sind die Lenker dabei parallel zueinander ausgerichtet.

Durch die erfindungsgemäße Ausbildung der Gelenkverbindung sowie eine Anbringung der Lenker an einer Gehäusewand des der Fahrspur des landwirtschaftlichen Trägerfahrzeuges zugewandten, seitlichen Abschnittes der Mäheinrichtung wird in vorteilhafter Weise erreicht, daß an der Gelenkverbindung lediglich die Gewichtskraft der Mähein richtung aufgenommen wird, während die erforderlichen Führungskräfte (diese Führungskräfte ergeben sich aus den Boden- und Mähwiderständen der Mäheinrichtung) von den, in einem möglichst großen Wirkabstand zur Gelenkverbindung angeordneten Lenkern aufgebracht werden. Dadurch ergibt sich eine optimale Führung der Mäheinrichtung, wobei außerdem die von den Lenkern aufzunehmenden Führungskräfte möglichst gering und somit die konstruktiven Abmessungen klein gehalten werden können.

Gemäß einer weiteren vorteilhaften Ausbildung der Erfindung kann in einfacher Weise eine Veränderung der Neigung der Mäheinrichtung gegenüber dem Erdboden durchgeführt werden. Dazu ist zumindest einer der Lenker, vorzugsweise der obere Lenker in seiner Länge verstellbar ausgebildet. Dadurch wird es ermöglicht, zur Anpassung der Schnitthöhe der Schneidorgane lediglich die Neigung der Mäheinrichtung mit oder ohne nachgeordneter Aufbereitungseinrichtung in Bezug zum Erdboden zuverstellen, wobei die Lage der gesamten Trageinrichtung der Mähmaschine unberücksichtigt bleibt. Somit ergeben sich natürlich wesentlich kleinere, durch den Bediener aufzubringende Verstellkräfte, da sich lediglich das Gewicht der Mäheinrichtung mit oder ohne nachgeordneter Aufbereitungseinrichtung auf die Größe der Verstellkräfte auswirkt. Desweiteren ergibt sich durch den vorgenannten Aspekt, daß die Übertragungseigenschaften eines vom landwirtschaftlichen Trägerfahrzeug ausgehenden Antriebes der Mähmaschine durch die Verstellung der Schnitthöhe der Schneidorgane nicht mehr beeinflußt werden. Das bedeutet, daß bereits beim Ankoppeln der Mähmaschine an das landwirtschaftliche Trägerfahrzeug, beispielsweise durch eine Veränderung der Länge eines Oberlenkers einer Dreipunkthubeinrichtung die Beugungswinkel einer Antriebsgelenkwelle so gewählt werden, daß sich optimale Antriebseigenschaften (keine Beschleunigungen oder Verzögerungen durch unterschiedliche Beugungswinkel) ergeben. Diese Antriebseigenschaften werden dann bei einer Verstellung der Neigung der Mähmaschine gegenüber dem Erdboden zur Anpassung der Schnitthöhe der Schneidorgane nicht mehr verändert.

In einer Weiterbildung der Erfindung ist es auch denkbar, die der Gelenkverbindung zugeordneten Lenker in zwei voneinander beabstandeten Ebenen anzubringen, wobei der obere Lenker sich in einer die Gelenkverbindung mittig schneidenden Ebene befinden kann und der untere Lenker an der Gehäusewand des der Fahrspur des landwirtschaftlichen Trägerfahrzeuges zugewandten, seitlichen Abschnittes der Mäheinrichtung angebracht ist.

Eine detaillierte Beschreibung des Gegenstandes der Erfindung erfolgt nun anhand eines Ausführungsbeispieles. In der Zeichnung stellt im einzelnen dar:
- Fig.1: eine Draufsicht einer erfindungsgemäßen, an ein landwirtschaftliches Trägerfahrzeug angekoppelten Mähmaschine in einer Arbeits- und Betriebsstellung;
- Fig.2: eine perspektivische Ansicht der Mähmaschine mit einer Blickrichtung aus einer hinter der Mähmaschine gelegenen Position;
- Fig.3: eine vergrößerte, perspektivische Darstellung der Einzelheit X aus Fig.1;

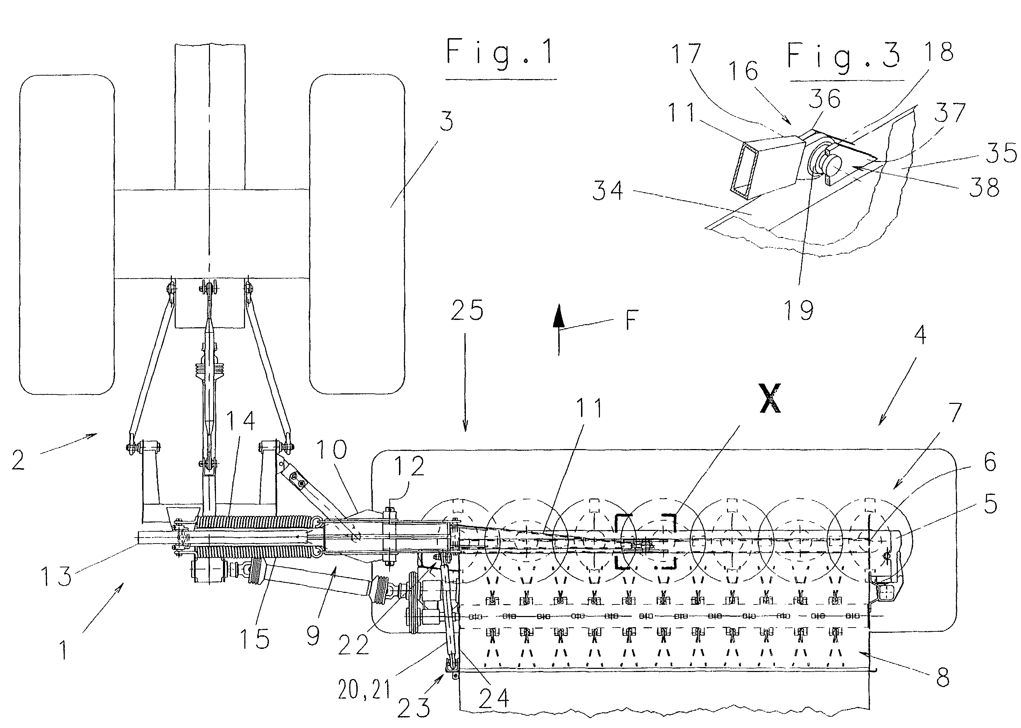

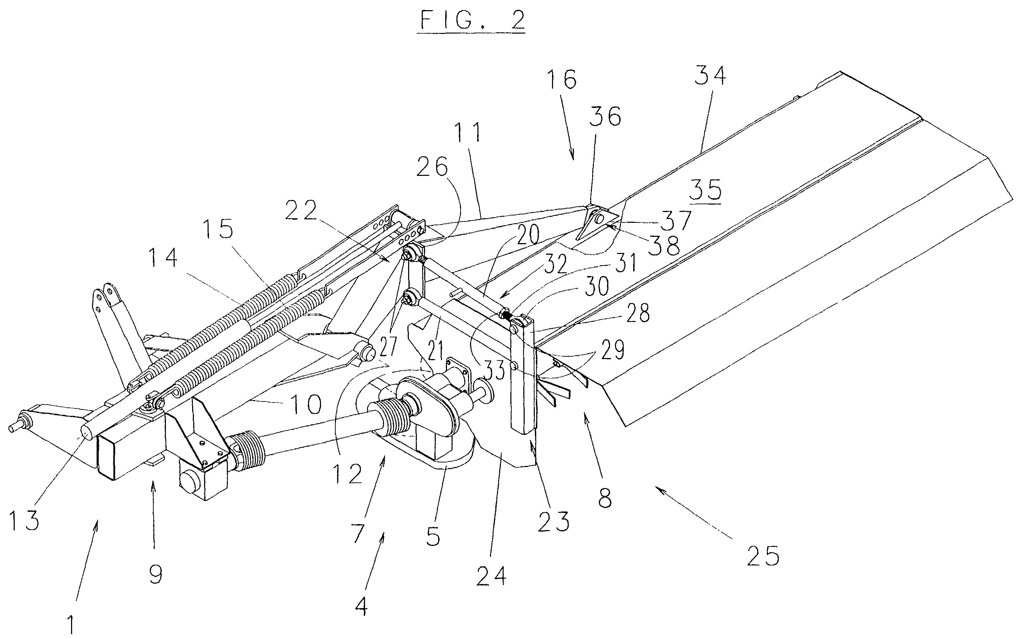

Eine mögliche Ausführungsform einer erfindungsgemäßen Mähmaschine ist in den Figuren 1 und 2 näher veranschaulicht. Wie insbesondere aus Fig.1 zu erkennen ist, kann dies eine mit einer Trageinrichtung 1 an eine Dreipunkthubvorrichtung 2 eines landwirtschaftlichen Trägerfahrzeuges 3 ankoppelbare Mähmaschine sein, deren Mäheinrichtung 4 in einer Arbeits- und Betriebsstellung seitlich von dem landwirtschaftlichen Trägerfahrzeug 3 geführt ist. Zur Anpassung an verschiedenste Einsatzverhältnisse oder Erntegüter kann der aus einer Anzahl von auf einem Mähholm 5 angebrachten und um eine in etwa vertikale Achse 6 rotierenden Schneidorganen 7 bestehenden Mäheinrichtung 4 eine Aufbereitungseinrichtung 8 nachgeordnet sein. Wie weiterhin aus Fig.1 und 2 hervorgeht, umfaßt die Trageinrichtung 1 der Mähmaschine einen in der Arbeits- und Betriebsstellung quer zur Fahrt- und Arbeitsrichtung F ausgerichteten Tragarm 9, welcher aus einem inneren Tragarmteil 10 und einem äußeren Tragarmteil 11 gebildet ist, wobei der äußere Tragarmteil 11 um eine in Fahrt- und Arbeitsrichtung F gerichtete Achse 12 schwenkbar am inneren Tragarmteil 10 gelagert ist. Somit ist es möglich, durch eine Schwenkbewegung des äußeren Tragarmteiles 11 um die Achse 12 die Mäheinrichtung 4 aus der horizontalen Arbeits- und Betriebsstellung in eine etwa vertikal ausgerichtete Transportstellung und umgekehrt aus der Transportstellung zurück in die Arbeits- und Betriebsstellung zu überführen. Dazu kann eine hydraulische Kolben-Zylinder-Anordnung 13 vorgesehen sein, die vom landwirtschaftlichen Trägerfahrzeug 3 aus mit Druckmittel versorgt wird. Ferner können der hydraulischen Kolben-Zylinder-Anordnung 13 Entlastungsfedern 14,15 zur Anpassung der Auflagekraft des Mähholmes 5 auf dem Erdboden zugeordnet sein. Im Rahmen der Erfindung ist es jedoch auch vorstellbar, abweichend von der vorstehend beschriebenen Bauart, Mähmaschinen einzusetzen, die beidseitig von einem landwirtschaftlichen Trägerfahrzeug geführt werden. In diesem Zusammenhang ist beispielsweise ein Anbau einer Kombination von Mähmaschinen an einem landwirtschaftlichen Trägerfahrzeug zu erwähnen.

Wie weiterhin aus den Figuren 1 und 2, insbesondere jedoch aus Fig. 2 zu entnehmen ist, wird die Verbindung zwischen dem äußeren Tragarmteil 11 des Tragarmes 9 und der Mäheinrichtung 4 von einer Gelenkverbindung 16 gebildet, welche eine in Fahrt- und Arbeitsrichtung F gerichtete Schwenkachse 17 und zumindest eine etwa quer zur Fahrt- und Arbeitsrichtung F gerichtete Schwenkachse 18 aufweist (Fig.3). Eine vorteilhafte und kostengünstige Ausbildung geht davon aus, daß die Gelenkverbindung 16 als ein Kugelgelenk 19 ausgeführt ist. Zur Führung der Mäheinrichtung 4 sind der Gelenkverbindung 16 Lenker 20,21 zugeordnet, welche an einem Aufnahmestück 22 am Tragarmteil 11 des Tragarmes 9 und an einem Aufnahmestück 23 an einer Gehäusewand 24 eines der Fahrspur des landwirtschaftlichen Trägerfahrzeuges 3 zugewandten, seitlichen Abschnittes 25 der Mäheinrichtung 4 angelenkt ist. Einfache konstruktive Ausführungsformen gehen davon aus, daß das Aufnahmestück 22 als eine Aufnahmelasche 26 ausgeführt ist, an der mittels eine Schraubverbindung 27 die Lenker 20,21 angebracht sind, während das Aufnahmestück 23 an der Gehäusewand 24 der Mäheinrichtung 4 als eine Aufnahmetasche 28 ausgebildet ist, in der über eine Bolzenverbindung 29 die Lenker 20,21 gehaltert sind. Zur schwenkbeweglichen Lagerung der Lenker 20,21 an der Aufnahmelasche 26 bzw. in der Aufnahmetasche 28 sind Kugelgelenke 30 endseitig an den Lenkern 20,21 angebracht.

Gemäß einer weiteren Ausbildung der Erfindung ist es vorgesehen, zumindest einen der Lenker 20,21, vorzugsweise jedoch den oberen Lenker 20 in seiner Länge verstellbar auszubilden. Dadurch ist eine für den Bediener unter geringen Kraftanstrengungen durchführbare Verstellung der Neigung der Mäheinrichtung 4 gegenüber dem Erdboden zur Anpassung der Schnitthöhe der Schneidorgane 7 erreichbar. Die Längenveränderung des oberen Lenkers 20 wird dabei dadurch ermöglicht, daß die Kugelgelenke 30 über einen Gewindezapfen 31 in einen mittleren Abschnitt 32 des Lenkers 20 einschraubbar sind, so daß durch ein Verdrehen des mittleren Abschnittes 32 des Lenkers 20 dessen Länge veränderbar ist. Als Sicherung gegen eine nicht beabsichtigte Drehbewegung des mittleren Abschnittes 32 kann eine Kontermutter 33 eingesetzt sein.

In Fig.3 wird in einer vergrößerten perspektivischen Darstellung eine Ausführung der erfindungsgemäßen Gelenkverbindung 16 näher veranschaulicht. Wie aus dieser Figur ersichtlich, umfaßt die Gelenkverbindung 16 ein endseitig an dem äußeren Tragarmteil 11 des Tragarmes 9 befestigtes Kugelgelenk 19 sowie an einem Querbalken 34 eines Gehäuses 35 der Mäheinrichtung 4 arretierte Haltelaschen 36,37. Die Verbindung zwischen dem Kugelgelenk 19 des äußeren Tragarmteiles 11 und den Haltelaschen 36,37 erfolgt über eine Bolzenverbindung 38.

Gemäß einer Weiterbildung der Erfindung ist es auch denkbar, die der Gelenkverbindung 16 zugeordneten Lenker in zwei voneinander beabstandeten Ebenen anzubringen, wobei der obere Lenker sich in einer die Gelenkverbindung 16 mittig schneidenden Ebene befinden kann und der untere Lenker an der Gehäusewand 24 des der Fahrspur des landwirtschaftlichen Trägerfahrzeuges 3 zugewandten seitlichen Abschnittes 25 der Mäheinrichtung 4 angebracht ist.

Durch die erfindungsgemäße Ausbildung der Gelenkverbindung 16 sowie der Anbringung der Lenker 20,21 an der Gehäusewand 24 des der Fahrspur des landwirtschaftlichen Trägerfahrzeuges 3 zugewandten, seitlichen Abschnittes 25 der Mäheinrichtung 4 wird in vorteilhafter Weise erreicht, daß an der Gelenkverbindung 16 lediglich die Gewichtskraft der Mäheinrichtung 4 aufgenommen wird, während die erforderlichen Führungskräfte (diese Führungskräfte ergeben sich aus den Boden- und Mähwiderständen der Mäheinrichtung 4) von den, in einem möglichst großen Wirkabstand zur Gelenkverbindung 16 angeordneten Lenkern 20,21 aufgebracht werden. Dadurch ergibt sich eine optimale Führung der Mäheinrichtung 4, wobei außerdem die von den Lenkern 20,21 aufzunehmenden Führungskräfte möglichst gering und somit deren konstruktive Abmessungen klein gehalten werden können.

Obwohl in der Zeichnung und in der Beschreibung eine bevorzugte Ausführungsform beschrieben ist, so sind aber durchaus noch weitere Modifikation der erfindungsgemäßen Mähmaschine vorstellbar. Beispielsweise ist es ohne weiteres möglich, eine der Haltelaschen 36,37 der Gelenkverbindung 16 mit einem sich in vertikaler Richtung erstreckenden Langloch zu versehen. Dadurch ist es erreichbar, eine Gelenkverbindung zu schaffen, bei der auch bei Verwendung eines Gelenkes mit nur eine Schwenkachse eine Schwenkbewegung um sowohl eine in Fahrt- und Arbeitsrichtung F zeigende Schwenkachse als auch um eine quer zur Fahrt- und Arbeitsrichtung F gerichtete Schwenkachse in einem begrenzten Ausmaß möglich ist.

## Patentansprüche

1. Mähmaschine, insbesondere ein Scheibenmähwerk mit einer in einer Arbeits- und Betriebsstellung seitlich von einem landwirtschaftlichem Trägerfahrzeug (3) geführten Mäheinrichtung (4), die eine Anzahl auf einem Mähholm (5) angebrachter, um jeweils eine etwa vertikale Achse (6) rotierender Schneidorgane (7) umfaßt, sowie mit einer Trageinrichtung (1), welche einen ein- oder mehrteiligen Tragarm (9) aufweist, an dem mittels einer zumindest um eine in Fahrt- und Arbeitsrichtung (F) gerichtete Achse (17) schwenkbaren und bezüglich der Arbeitsbreite zumindest etwa mittig an der Mäheinrichtung (4) angebrachten Gelenkverbindung (16) die Mäheinrichtung (4) gehaltert ist, **dadurch gekennzeichnet, daß** die Gelenkverbindung (16) zwischen dem Tragarm (9) der Trageinrichtung (1) und der Mäheinrichtung (4) zumindest zwei Schwenkachsen (17,18) aufweist und daß der Gelenkverbindung (16) zur Führung der Mäheinrichtung (4) Lenker (20,21) zugeordnet sind, welche sich von dem Tragarm (9) ausgehend zu einem seitlichen Abschnitt (25) der Mäheinrichtung (4) erstrecken, der der Fahrspur des landwirtschaftlichen Trägerfahrzeuges zugewandt ist.

2. Mähmaschine nach Anspruch 1, **dadurch gekennzeichnet, daß** die Gelenkverbindung (16) zwischen dem Tragarm (9) der Tragvorrichtung (1) und der Mäheinrichtung (4) zumindest eine in Fahrt- und Arbeitsrichtung (F) gerichtete Schwenkachse (17) und eine zumindest etwa quer zur Fahrt- und Arbeitsrichtung (F) angeordnete Schwenkachse (18) umfaßt.

3. Mähmaschine nach Anspruch 1 und 2, **dadurch gekennzeichnet, daß** die Gelenkverbindung (16) vorzugsweise als ein Kugelgelenk (19) ausgebildet ist.

4. Mähmaschine nach einem der Ansprüche 1 bis 3, **dadurch gekennzeichnet, daß** sich die der Gelenkverbindung (16) zugeordneten Lenker (20,21) vom Tragarm (9) ausgehend in einer der Fahrt- und Arbeitsrichtung (F) entgegengesetzt gerichteten Richtung zur Mäheinrichtung (4) erstrecken.

5. Mähmaschine nach einem der Ansprüche 1 bis 3, **dadurch gekennzeichnet, daß** die der Gelenkverbindung (16) zugeordneten Lenker (20,21) vom Tragarm (9) ausgehend in einer der Fahrt- und Arbeitsrichtung (F) entsprechenden Richtung zur Mäheinrichtung (4) verlaufen.

6. Mähmaschine nach einem der Ansprüche 1 bis 5, **dadurch gekennzeichnet, daß** die der Gelenkverbindung (16) zugeordneten Lenker (20,21) mit einem Aufnahmestück (22) des Tragarmes (9) und einem Aufnahmestück (23) der Mäheinrichtung (4) eine Form eines viergliedrigen Kurbelgetriebes aufweisen.

7. Mähmaschine nach einem der Ansprüche 1 bis 6, **dadurch gekennzeichnet, daß** die Lenker (20,21) parallel zueinander angeordnet sind.

8. Mähmaschine nach einem der Ansprüche 1 bis 7, **dadurch gekennzeichnet, daß** die der Gelenkverbindung (16) zugeordneten Lenker (20,21) in einer zumindest etwa in Fahrt- und Arbeitsrichtung (F) gerichteten vertikalen Ebene übereinander angeordnet sind.

9. Mähmaschine nach einem der Ansprüche 1 bis 7, **dadurch gekennzeichnet, daß** die Lenker (20,21) in zwei zumindest etwa in Fahrt- und Arbeitsrichtung (F) gerichteten und in einem Abstand zueinander angeordneten, vertikalen Ebenen liegen.

10. Mähmaschine nach einem der Ansprüche 1 bis 9, **dadurch gekennzeichnet, daß** die Lenker (20,21) einenends an einer Aufnahmelasche (26) am Tragarm (9) angelenkt und anderenends in einer Aufnahmetasche (28) an einer Gehäusewand (24) des der Fahrspur des landwirtschaftlichen Trägerfahrzeug zugewandten, seitlichen Abschnittes (25) der Mäheinrichtung (4) gelagert sind.

11. Mähmaschine nach einem der Ansprüche 1 bis 10, **dadurch gekennzeichnet, daß** die Lenker (20,21) an ihren Enden zur Lagerung bzw. Anlenkung am Tragarm (9) und an der Mäheinrichtung (4) mit einem Kugelgelenk (30) versehen sind.

12. Mähmaschine nach einem der Ansprüche 1 bis 11, **dadurch gekennzeichnet, daß** zumindest einer der Lenker (20,21) längenveränderbar ausgebildet ist.

13. Mähmaschine nach einem der Ansprüche 1 bis 12, **dadurch gekennzeichnet, daß** der obere Lenker (20) längenveränderbar ist.

14. Mähmaschine nach Anspruch 9, **dadurch gekennzeichnet, daß** der obere Lenker (20) in einer die Gelenkverbindung (16) mittig schneidenden, zumindest etwa in Fahrt- und Arbeitsrichtung (F) ausgerichteten, vertikalen Ebene und der untere Lenker (21) in der Ebene entlang der Gehäusewand (24) des der Fahrspur des landwirtschaftlichen Trägerfahrzeuges zugewandten seitlichen Abschnittes (25) der Mäheinrichtung (4) angeordnet ist.

15. Mähmaschine nach Anspruch 14, **dadurch gekennzeichnet, daß** der obere Lenker (20) sich von einem oberhalb der Gelenkverbindung (16) gelegenen und am Tragarm (9) gehalterten Aufnahmestück (22) zu einem an der Oberseite eines Gehäuses (35) der Mäheinrichtung (4) angebrachten Aufnahmestück (23) erstreckt, während der untere Lenker (21) an der Aufnahmelasche (26) am Tragarm (9) und an der Aufnahmetasche (28) an der Gehäusewand (24) des der Fahrspur zugewandten, seitlichen Abschnittes (25) angelenkt ist.

## Claims

1. Mowing machine, particularly a disk mowing machine with a mowing assembly (4), carried in a working and operating position to the side of an agricultural carrier vehicle (3), that has a number of cutting elements (7), each rotating about an approximate vertical axis (6) and mounted on a mower beam (5), and also with a carrier assembly (1) that has a single- or multi-part carrier arm (9) on which the mower assembly (4) is mounted, by means of a swivel joint (16) that swivels about an axis (17) aligned at least in one travelling and working direction (F) and is fitted approximately centrally on the mower assembly (4) relative to the working width, **characterised in that** the swivel joint (16) has a least two swivel axes (17, 18) between the carrier arm (9) of the carrier assembly (1) and mower assembly (4) and that the swivel joint (16) is assigned control arms (20, 21) to guide the mower assembly (4) that extend from the carrier arm (9) to a side section (25) of the mower assembly (4) that faces the track of the agricultural carrier vehicle.

2. Mowing machine in accordance with claim 1, **characterised in that** the swivel joint (16) comprises, between the carrier arm (9) of the carrier assembly (1) and the mowing assembly (4), at least one swivel axis (17) aligned in a travelling and working direction (F) and at least one swivel axis (18) aligned transverse to the travelling and working direction (F).

3. Mowing machine in accordance with claims 1 and 2, **characterised in that**, the swivel joint (16) is preferably designed as a ball joint (19).

4. Mowing machine in accordance with one of claims 1 to 3, **characterised in that**, the control arms (20, 21) assigned to the swivel joint (16) extend outwards from the carrier arm (9) in the direction of the mowing assembly (4) against the driving and working direction (F).

5. Mowing machine in accordance with one of claims 1 to 3, **characterised in that** the control arms (20, 21) assigned to the swivel joint (16) extend outwards from the carrier arm (9) in the direction of the mowing assembly (4) corresponding to the driving and working direction (F).

6. Mowing machine in accordance with one of claims 1 to 5, **characterised in that** the control arms (20, 21) assigned to the swivel joint (16) have an attaching piece (22) for the carrier arm (9) and an attaching piece (23) for the mowing assembly (4) in the form of a four-element crank mechanism.

7. Mowing machine in accordance with one of claims 1 to 6, **characterised in that** the control arms (20, 21) are arranged parallel to each other.

8. Mowing machine in accordance with one of claims 1 to 7, **characterised in that** the control arms (20, 21) assigned to the swivel joint (16) are arranged in a vertical plane one above the other in at least the approximate driving and working direction (F).

9. Mowing machine in accordance with one of claims 1 to 7, **characterised in that** the control arms (20, 21) lie in two vertical planes arranged at least approximately in the driving and working direction (F) and at a distance from each other.

10. Mowing machine in accordance with one of claims 1 to 9, **characterised in that** the control arms (20, 21) are pivot-mounted at one end on an attaching strap (26) on the carrier arm (9) and mounted at the other end in an attaching fork (28) at a cover panel (24) of the side section (25) of the mower assembly (4), facing towards the track of the agricultural carrier vehicle.

11. Mowing machine in accordance with one of claims 1 to 10, **characterised in that** the control arms (20, 21) are provided with ball joints (30) at their ends on the carrier arm (9) and mower assembly (4), for mounting and controlling.

12. Mowing machine in accordance with one of claims 1 to 11, **characterised in that** the length of at least one of the control arms (20, 21) is adjustable.

13. Mowing machine in accordance with one of claims 1 to 12, **characterised in that** the length of the upper control arm (20) is adjustable.

14. Mowing machine in accordance with claim 9, **characterised in that** the upper control arm (20) is arranged in a vertical plane that intersects the swivel joint (16) centrally, aligned at least approximately in the driving and working direction (F), and the lower control arm (21) is arranged in the plane along the housing cover (24) of the side section (25) of the mowing assembly (4) facing towards the track of the agricultural carrier vehicle.

15. Mowing machine in accordance with claim 14, **characterised in that** the upper control arm (20) extends from an attaching piece (22), located above the swivel joint (16) and secured to the carrier arm (9), to an attaching piece (23) mounted on the upper side of the housing (35) of the mower assembly (4), while the lower control arm (21) is hinge-mounted on the attaching strap (26) on the carrier arm (9) and on the attaching fork (28) on the cover wall (24) of the side section (25) facing towards the track.

## Revendications

1. Faucheuse notamment faucheuse à disque comportant une installation de fauche (4) guidée en position de travail et de fonctionnement, latéralement par un véhicule tracteur agricole (3), cette installation ayant un certain nombre d'organes de coupe (7), rotatifs tournant chacun autour d'un axe sensiblement vertical (6) et porté par une barre de fauche (5), ainsi qu'une installation de support (1) ayant un bras de support (9) en une ou plusieurs parties sur lequel est montée l'installation de fauche (4) par l'intermédiaire d'une liaison articulée (16) montée pivotante autour d'au moins un axe (17) dirigé dans la direction de déplacement et de travail (F) et qui se trouve sensiblement au milieu de la largeur de travail,
**caractérisée en ce que**
la liaison articulée (16) entre le bras de support (9) de l'installation de support (1) et l'installation de fauche (4) comporte au moins deux axes de pivotement (17, 18), et
la liaison articulée (16) comporte pour guider l'installation de fauche (4), des bras (20, 21) partant du bras de support (9) qui s'étendent vers un segment latéral (25) de l'installation de fauche (4) tourné vers la trace du tracteur agricole.

2. Faucheuse selon la revendication 1,
**caractérisée en ce que**
la liaison articulée (16) entre le bras de support (9) du dispositif de support (1) et de l'installation de fauche (4) comporte au moins un axe de pivotement (17) dirigé dans la direction de déplacement et de travail (F) et au moins un axe de pivotement (18) dirigé sensiblement transversalement à la direction de déplacement et de travail (F).

3. Faucheuse selon les revendications 1 et 2,
**caractérisée en ce que**
la liaison articulée (16) est de préférence une articulation à rotule (19).

4. Faucheuse selon les revendications 1 à 3,
**caractérisée en ce que**
les bras (20, 21) associés à la liaison articulée (16) s'étendent à partir du bras de support (9) dans une direction par rapport à l'installation de fauche (4) qui est opposée à la direction de déplacement et de travail (F).

5. Faucheuse selon l'une des revendications 1 à 3,
**caractérisée en ce que**
les bras (20, 21) associés à la liaison articulée (16) partent du bras de support (9) pour arriver par rapport à l'installation de fauche (4) dans une direction correspondant à la direction de déplacement et de travail (F).

6. Faucheuse selon l'une des revendications 1 à 5,
**caractérisée en ce que**
les bras (20, 21) associés à la liaison articulée (16) ont avec une pièce de réception (22) du bras de support (9) et une pièce de réception (23) de l'installation de fauche (4), la forme d'une transmission à manivelle à quatre éléments.

7. Faucheuse selon l'une des revendications 1 à 6,
**caractérisée en ce que**
les bras (20, 21) sont parallèles.

8. Faucheuse selon l'une des revendications 1 à 7,
**caractérisée en ce que**
les bras (20, 21) associés à la liaison articulée (16) sont prévus l'un au-dessus de l'autre dans un plan vertical dirigé sensiblement dans la direction de déplacement et de travail (F).

9. Faucheuse selon l'une des revendications 1 à 7,
**caractérisée en ce que**
les bras (20, 21) se situent dans deux plans verticaux dirigés sensiblement dans la direction de déplacement et de travail (F) et distant l'un de l'autre.

10. Faucheuse selon l'une des revendications 1 à 9,
**caractérisée en ce que**
les bras (20, 21) sont articulés par une extrémité à une patte de réception (26) du bras de support (9) et par l'autre extrémité à une poche de réception (28) sur une paroi de boîtier (24) du segment latéral (25) de l'installation de fauche (4) tourné vers la trace du tracteur agricole.

11. Faucheuse selon l'une des revendications 1 à 10,
**caractérisée en ce que**
les bras (20, 21) sont munis à leurs extrémités, d'une articulation à rotule (30) pour le montage et l'articulation sur le bras de support (9) et sur l'installation de fauche (4).

12. Faucheuse selon l'une des revendications 1 à 11,
**caractérisée en ce qu'**
au moins l'un des bras (20, 21) est de longueur réglable.

13. Faucheuse selon l'une des revendications 1 à 12,
caraetérisée en ce que
le bras supérieur (20) est de longueur réglable.

14. Faucheuse selon la revendication 9,
**caractérisée en ce que**
le bras supérieur (20) est prévu dans un plan vertical coupant le milieu de la liaison articulée (16), et qui est aligné au moins sensiblement dans la direction de déplacement et de travail (F) et le bras inférieur (21) est situé dans le plan le long de la paroi de boîtier (24) du segment latéral (25) de l'installation de fauche (4), segment tourné vers la trace du tracteur agricole.

15. Faucheuse selon la revendication 14,
**caractérisée en ce que**
le bras supérieur (20) s'étend à partir d'une pièce de réception (22) située au-dessus de la liaison articulée (16) et portée par le bras de support (9), vers une pièce de réception (23) prévue sur le coté supérieur d'un boîtier (35) de l'installation de fauche (4), alors que le bras inférieur (21) est articulé à la poche de réception (26) du bras de support (9), et à la poche de réception (28) de la paroi de boîtier (24) du segment latéral (25) tourné vers la trace de déplacement.
